# EUROPEAN PATENT APPLICATION

(11) **EP 4 597 313 A1**
(43) Date of publication of application: **06.08.2025**
(21) Application number: 23881394.3
(22) Date of filing: 15.08.2023
(51) Int. Cl.: G06F 9/455

(54) **CLOUD DATA CENTER MANAGEMENT SYSTEM AND ELECTRONIC DEVICE**

(30) Priority: 27.10.2022 CN 202211328675
(71) Applicant: Shenzhen Jaguar Microsystems Co., Ltd., Shenzhen, Guangdong 518100 (CN)
(72) Inventor: LIU, Jingtao, Shenzhen, Guangdong 518100 (CN); LIU, Qingmin, Shenzhen, Guangdong 518100 (CN); CHEN, Shugang, Shenzhen, Guangdong 518100 (CN)
(74) Representative: Reddie & Grose LLP
(86) International application number: PCT/CN2023/113061
(87) International publication number: WO 2024/087810

(57) **Abstract**

A cloud data center management system and an electronic device are provided. The management system includes a first management module and a virtual machine monitor. The first management module and the virtual machine monitor are configured in the DPU. The first management module is configured to send a first control instruction to the virtual machine monitor. The first control instruction is configured to instruct the virtual machine monitor to perform a first operation on at least one virtual machine. The virtual machine monitor is configured to manage different types of virtualization technologies as virtual machines, and when receiving and executing the first control instruction, perform the first operation by invoking a callback function of a specific type of device corresponding to the virtual machine.

## Description

The present application claims the priority of Chinese patent application No. 202211328675.X, filed with the Chinese Patent Office on October 27, 2022, the content of which is hereby incorporated by reference in its entirety.

### TECHNICAL FIELD

The present application relates to the technical field of cloud data centers, for example, to a cloud data center management system and an electronic device.

### BACKGROUND

Cloud data centers require operation and maintenance. However, due to the huge scale of cloud data centers, the operation and maintenance efficiency directly affects operation costs. Among various cloud technology application scenarios of cloud data centers, a bare-metal application scenario, a virtualization application scenario, and a container application scenario are still in a separated state, and each requires development and maintenance of a set of management solutions respectively, resulting in low operation and maintenance flexibility and high complexity of the cloud data centers.

### SUMMARY

The cloud data center management system and electronic device according to the present application can solve the technical problems that a bare-metal application scenario, a virtualization application scenario, and a container application scenario are still in a separated state, and each requires development and maintenance of a set of management solutions respectively, resulting in low operation and maintenance flexibility and high complexity of the cloud data centers.

In an aspect, the present application provides a cloud data center management system including a first management module and a virtual machine monitor. The first management module and the virtual machine monitor are configured in a DPU.

The first management module is configured to send a first control instruction to the virtual machine monitor, and the first control instruction is configured to instruct the virtual machine monitor to perform a first operation on at least one virtual machine.

The virtual machine monitor is configured to manage different types of virtualization technologies as virtual machines, and when receiving and executing the first control instruction, perform the first operation by invoking a callback function of a type of device corresponding to the virtual machine.

In another aspect, the present application also provides an electronic device including a host, a Data Processing Unit (DPU), and a cloud data center management system as described above. The DPU is configured or inserted into the host, or the host is configured or inserted into the DPU.

### BRIEF DESCRIPTION OF THE DRAWINGS

FIG. 1 is a schematic structural diagram of a cloud data center management system according to embodiments of the present application.
FIG. 2 is a schematic structural diagram of another cloud data center management system according to embodiments of the present application.
FIG. 3 is a schematic structural diagram of an electronic device according to embodiments of the present application.

### DETAILED DESCRIPTION OF THE EMBODIMENTS

The present application will be described in conjunction with the accompanying drawings below.

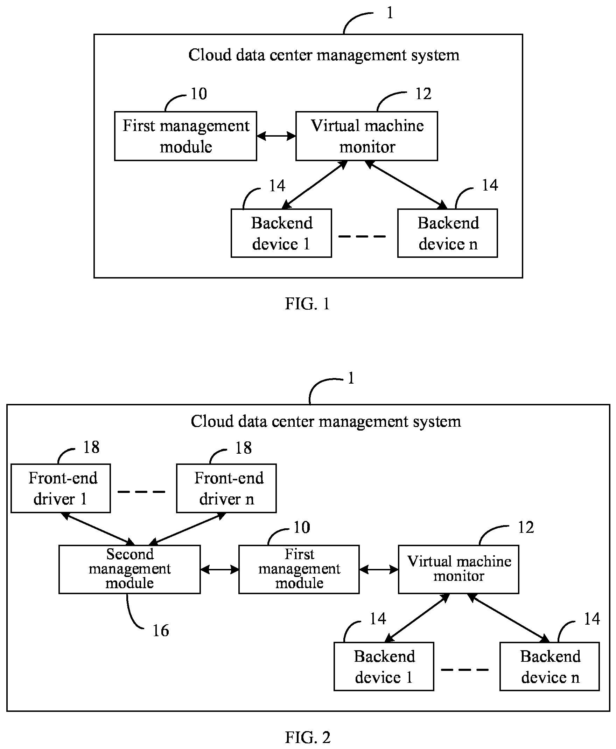

FIG. 1 is a schematic structural diagram of a cloud data center management system according to embodiments of the present application. In the embodiments of the present application, the cloud data center management system 1 includes a first management module 10 and a virtual machine monitor 12. The first management module 10 and the virtual machine monitor 12 are configured in a DPU. The DPU can be a chip based on System on Chip (SoC) or an intelligent network card based on Field Programmable Gate Array (FPGA).

The first management module 10 is configured to send a first control instruction to the virtual machine monitor 12. The first control instruction is configured to instruct the virtual machine monitor 12 to perform a first operation on at least one virtual machine.

The virtual machine monitor 12 is configured to manage different types of virtualization technologies as virtual machines, and when receiving and executing the first control instruction, perform the first operation by invoking a callback function of a specific type of device corresponding to the virtual machine.

The first operation includes at least creating or deleting a backend device 14 of the virtual machine. The backend devices 14 of the virtual machine are located in the DPU. The backend devices 14 are as virtual PCIE (Peripheral Component Interconnect Express) devices inside the virtual machine.

The different types of virtualization technologies include at least BareMetal (BM), Virtual Machine (VM), and Container.

The specific type of device corresponding to the virtual machine includes the backend device 14 of the virtual machine.

The callback function of the specific type of device corresponding to the virtual machine may be a processing function of the specific type of device. For example, when the specific type of device is a Non-Volatile Memory express (NVMe) device mounted by the virtual machine, the callback function may be an implementation function (nvme_device_realize) of the NVMe device mounted by the virtual machine.

In the embodiments of the present application, the first management module 10 is also configured to receive an operation and maintenance instruction, and when receiving the operation and maintenance instruction, send the first control instruction to the virtual machine monitor 12. The operation and maintenance instruction may be an instruction directly or indirectly issued by an operation and maintenance personnel of the data center.

In the embodiments of the present application, the first management module 10 and the virtual machine monitor 12 may communicate through a QEMU Machine Protocol (QMP).

The cloud data center management system according to the embodiments of the present application uniformly manages (such as scheduling) different types of virtualization technologies as virtual machines through the virtual machine monitor. For example, the cloud data center management system schedules the bare-metal, the virtual machine, or the container as virtual machines, i.e., offloading an integrated operation and maintenance scenario of the bare-metal, the virtual machine, and the container to the DPU for scheduling, which may avoid the need to develop and maintain a set of management solutions for different types of virtualization technologies respectively, thereby improving the operation and maintenance flexibility of the cloud data center, reducing the operation and maintenance complexity of the data center, and thus improving the operation and maintenance efficiency.

FIG. 2 is a schematic structural diagram of another cloud data center management system according to an embodiment of the present application. The embodiment shown in FIG. 2 of the present application may include the content of the embodiment shown in FIG. 1 of the present application. On the basis of the cloud data center management system in the embodiment shown in FIG. 1 of the present application, the cloud data center management system 1 in the embodiment shown in FIG. 2 of the present application may further include a second management module 16. The second management module 16 is configured in a host. The host may be a server or a server cluster.

The first management module 10 is also configured to send a second control instruction to the second management module 16 when receiving a feedback of the completion of the execution of the first control instruction, where the second control instruction is configured to instruct the second management module 16 to perform a second operation on the virtual machine.

The second management module 16 is configured to receive and execute the second control instruction to perform the second operation.

The second operation includes at least creating or deleting a front-end driver 18 of the virtual machine. The front-end drivers 18 of the virtual machine are located in the host. The front-end drivers 18 are drivers corresponding to the backend device 14 inside the virtual machine. The main function of the front-end driver 18 is to discover the backend device 14, receive requests from inside the virtual machine, and communicate with the backend device 14 according to a virtio protocol. For the Linux system, common front-end drivers may include virtio-net, virtio-blk, and virtio-scsi.

In the embodiments of the present application, the second management module 16 and the first management module 10 may communicate with each other through a Socket connection based on a Transmission Control Protocol (TCP).

The cloud data center management system according to the embodiments of the present application instructs the virtual machine monitor through the first management module inside the DPU to uniformly manage (such as scheduling) different types of virtualization technologies as virtual machines. For example, the virtual machine monitor schedules the bare-metal technology, the virtual machine technology, or the container technology as virtual machines to complete the creation or deletion of the backend device corresponding to the virtual machine. Then, the first management module instructs the second management module inside the host to complete the creation or deletion of the front-end driver, so as to offload the operation and maintenance of the bare-metal, the virtual machine, and the container to the DPU. Therefore, the need to develop and maintain a set of management solutions for different types of virtualization technologies respectively can be eliminated, thereby improving the operation and maintenance flexibility of the cloud data center, reducing the operation and maintenance complexity of the data center, and thus improving the operation and maintenance efficiency.

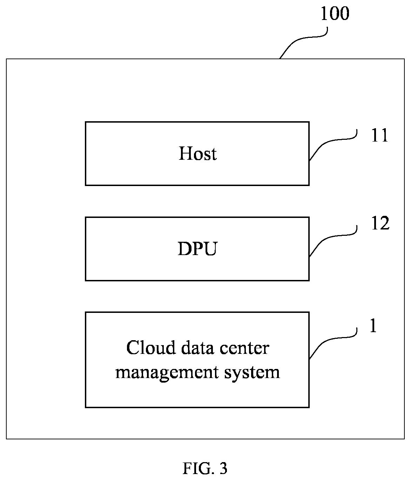

The embodiments of the present application also provides an electronic device. As shown in FIG. 3, the electronic device 100 includes a host 11, a DPU 12, and the cloud data center management system 1 located in the host 11 and the DPU 12. The DPU 12 is configured or inserted into the host 11, or the host 11 is configured or inserted into the DPU 12.

The unspecified parts of the electronic device according to the present application can be obtained by referring to the content of the management system of the cloud data center in the above-described embodiments, and will not be repeated here.

The electronic device according to the present application, by configuring the cloud data center management system, uniformly manages (such as scheduling) different types of virtualization technologies as virtual machines through the virtual machine monitor. For example, the cloud data center management system schedules the bare-metal technology, the virtual machine technology, or the container technology as virtual machines, i.e., offloading an integrated operation and maintenance scenario of the bare-metal technology, the virtual machine technology, and the container technology to the DPU for scheduling, which may avoid the need to develop and maintain a set of management solutions for different types of virtualization technologies respectively, thereby improving the operation and maintenance flexibility of the cloud data center, reducing the operation and maintenance complexity of the data center, and thus improving the operation and maintenance efficiency.

## Claims

1. A cloud data center management system, comprising a first management module and a virtual machine monitor, wherein the first management module and the virtual machine monitor are configured in a DPU;
the first management module is configured to send a first control instruction to the virtual machine monitor, and the first control instruction is configured to instruct the virtual machine monitor to perform a first operation on at least one virtual machine; and
the virtual machine monitor is configured to manage different types of virtualization technologies as virtual machines, and when receiving and executing the first control instruction, perform the first operation by invoking a callback function of a type of device corresponding to the virtual machine.

2. The management system according to claim 1, further comprising a second management module, wherein the second management module is configured in a host;
the first management module is further configured to send a second control instruction to the second management module when receiving a feedback of completion of the execution of the first control instruction, and the second control instruction is configured to instruct the second management module to perform a second operation on the virtual machine; and
the second management module is configured to receive and execute the second control instruction to perform the second operation.

3. The management system according to claim 1, wherein the first operation includes creating or deleting a backend device of the virtual machine, and the backend device of the virtual machine is located in the DPU and is a type of device corresponding to the virtual machine.

4. The management system according to claim 2, wherein the second operation includes creating or deleting a front-end driver of the virtual machine, and the front-end driver of the virtual machine is located in the host.

5. The management system according to claim 1, wherein the different types of virtualization technologies include bare-metal technology, virtual machine technology, and container technology.

6. The management system according to claim 1, wherein the first management module is further configured to receive an operation and maintenance instruction, and when receiving the operation and maintenance instruction, send the first control instruction to the virtual machine monitor.

7. The management system according to claim 1, wherein the first management module and the virtual machine monitor communicate with each other through a QEMU Machine Protocol (QMP).

8. The management system according to claim 1, wherein the second management module and the first management module communicate with each other through a Socket connection based on a Transmission Control Protocol (TCP).

9. The management system according to claim 2, wherein the DPU is configured in the host.

10. An electronic device, comprising a host, a DPU, and a cloud data center management system according to any one of claims 1 to 9, wherein the DPU is configured or inserted into the host, or the host is configured or inserted into the DPU.
